# EUROPÄISCHE PATENTANMELDUNG

(11) **EP 1 008 563 A1**
(43) Veröffentlichungstag der Anmeldung: **14.06.2000**
(21) Anmeldenummer: 99124480.7
(22) Anmeldetag: 08.12.1999
(51) Int. Cl.: C03C 10/00, C03C 8/24, H01M 2/08, H01M 8/02

(54) **Alkalifreie Glaskeramiken als Fügematerial für den Hochtemperatureinsatz**

(30) Priorität: 10.12.1998 DE 19857057
(71) Anmelder: Fraunhofer-Gesellschaft zur Förderung der angewandten Forschung e.V., 80636 München (DE)
(72) Erfinder: Durschang, Bernhard R., 97082 Würzburg (DE)
(74) Vertreter: Olgemöller, Luitgard, Dr.

(57) **Zusammenfassung**

Die vorliegende Erfindung betrifft die Verwendung einer alkalifreien Oxidmischung, umfassend mindestens die folgenden Komponenten:
(a) Siliciumdioxid in einem Stoffmengenanteil von 35 bis 55 %,
(b) Magnesiumoxid in einem Stoffmengenanteil von 20 bis 50 % sowie
(c) mindestens ein Oxid, ausgewählt unter Calciumoxid, Strontiumoxid und Bariumoxid, mit der Maßgabe, daß der Stoffmengenanteil von Calciumoxid, Strontiumoxid und Bariumoxid zusammen mindestens 5 % beträgt und der Stoffmengenanteil jedes einzelnen dieser drei Oxide 15 % nicht übersteigt,
   als glaskeramisches Fügematerial mit einem Wäremausdehnungskoeffizienten von ≥ 10·10⁻⁶K⁻¹ für den Einsatz bei hohen Temperaturen, oder zur Herstellung eines solchen Fügematerials. Die Oxidmischung kann zusätzlich ein oder mehrere Oxide enthalten, ausgewählt aus der Gruppe B₂O₃, Al₂O₃, La₂O₃, Y₂O₃ ZnO, TiO₂ ZrO₂ FeO und Fe₂O₃. Aus den kristallinen oder amorphen Komponenten wird ein Glas erschmolzen, das einem Temperaturverlauf ausgesetzt wird, der zuerst ein Breitlaufen und anschließend das Kristallisieren von Material bewirkt.

## Beschreibung

Die vorliegende Erfindung betrifft kristallisierbare Glaszusammensetzungen und Glaskeramiken, die dauerhaft im Hochtemperaturbereich (bis ca. 1100°C), z.B. als Fügematerial für Hochtemperaturbrennstoffzellen (solid oxid fuel cell, SOFC), eingesetzt werden können.

Bei Hochtemperaturbrennstoffzellen sind z.B. Flachzellenkonstruktionen im Einsatz, bei denen für eine effiziente Nutzung (multi-kW-Bereich) einzelne Zellen zu Stacks zusammengefügt werden. Für die Trennung von Brennstoff- und Oxidationsmittelbereich ist der Einsatz eines Löt- und Abdichtmaterials notwendig, welches einerseits den Anforderungen an das Endprodukt genügen muß, andererseits das Fügen der Stacks erlaubt.

Die Anforderungen an das Material im fertigen Stack sind primär ein an die Kontaktmaterialien angepaßter Wärmeausdehnungskoeffizient α, eine sehr gute elektrische Isolation zwischen Kathoden- und Anodenseite, hohe Dichtigkeit sowie hohe mechanische, elektrische und chemische Stabilität für Betriebszeiten von bis zu 50.000 Stunden.

Zum Fügen des Stacks muß (angepaßt an die evtl. zusätzlich notwendigen Temperaturprofile) ein Temperatur-Zeit-Programm anwendbar sein, das die weiteren Materialien nicht schädigt, ein kontrolliertes Absetzen des Stacks gewährleistet und einen dichten Verbund mit den Kontaktmaterialien sichert. Bei der Verwendung von nicht massiven Bauteilen muß außerdem eine viskose Verformung des Ausgangsmaterials zu einer dichten Struktur stattfinden.

Im genannten Anwendungsfall der SOFC müssen die eingesetzten Materialien im Ausdehnungskoeffizienten dem Elektrolyten, also stabilisiertem ZrO₂, angepaßt sein. Dieser erlaubt mit seinem α-Wert von ca. 12·10⁻⁶K⁻¹ den Einsatz von gebräuchlichen Metallen bzw. metallischen Legierungen als weitere Komponenten. Für das Abdicht- bzw. Lötmaterial wird daher ebenfalls ein Ausdehnungskoeffizient von mindestens 10·10⁻⁶K⁻¹ gefordert.

Nicht kristallisierende Gläser scheiden bei Einsatztemperaturen wie beispielsweise für SOFC's verlangt aus, da keine Gläser existieren, die sowohl eine Transformationstemperatur oberhalb 900°C als auch einen Ausdehnungskoeffizienten größer als 10·10⁻⁶K⁻¹ besitzen. Außerdem benötigte ein solches Glas eine Fügetemperatur, die deutlich über die Belastungsgrenzen der Kontaktmaterialien hinausreichen würde. Liegt die Betriebstemperatur aber deutlich oberhalb des Transformationsbereiches, sind die mechanischen, chemischen und elektrischen Eigenschaften nicht zu gewährleisten. Außerdem besitzt keines der denkbaren Gläser eine bei diesen Temperaturen für 50.000 Stunden Einsatzdauer notwendige Glasstabilität, so daß beim Versuch, ein Glas zu verwenden, unweigerlich eine dann ungesteuerte Kristallisation auftreten würde.

Der Einsatz von kristallisierenden Gläsern als Verschluß- und Beschichtungsmaterial ist bekannt. Diese Materialien werden in unterschiedlichen Bereichen mit variierenden Kontaktmaterialien eingesetzt. Eine Übersicht bietet das Review von I.W. Donald: "Preparation, properties and chemistry of glass- and glass-ceramic-to-metal seals and coatings." J. Mater. Sci. 28 (1993), 2841-2886. Während alkalihaltige Glaskeramiksysteme in großer Vielfalt existieren und meist intensiv untersucht wurden, kommen für alkalifreie Zusammensetzungen nur wenige Systeme zum Einsatz. Hier ist insbesondere das Cordierit-System zu erwähnen (Mg₂Al₄Si₅O₁₈), welches seit langem erforscht wird und einen geringen Ausdehnungskoeffizienten von 2,2·10⁻⁶K⁻¹ aufweist.

Eine Glaskeramik mit einem Ausdehnungskoeffizienten von etwa 10·10⁻⁶K⁻¹ ist von Z.-X. Chen im Journal of Materials Science 20 (1985), S. 3428-3438, beschrieben worden. Sie besteht aus einem MgO-ZnO-SiO₂-System mit geringen Al₂O₃-Anteilen. Bei der Kristallisation bilden sich nacheinander Enstatit, Willemit und α-Cristobalit. Aufgrund der sehr unterschiedlichen Ausdehnungskoeffizienten dieser kristallinen Phasen (α₂₀₋₄₀₀ = 9·10⁻⁶K⁻¹ für Enstatit, = 1,6·10⁻⁶K⁻¹ für Willemit und wiederum deutlich höher für α-Cristobalit) steigt der Ausdehungskoeffizient dieses Systems in den Temperaturbereichen zwischen 800°C und 900°C und zwischen 1000°C und 1100°C sprunghaft an.

Aufgabe der vorliegenden Erfindung ist es, ein Glaskeramik-Material für die Verwendung im Hochtemperaturbereich, d.h. bei Temperaturen bis mindestens etwa 950°C, bevorzugt sogar bis etwa 1100°C, und mit einem gleichmäßigen Ausdehnungskoeffizienten von mindestens etwa 10·10⁻⁶K⁻¹, bevorzugt etwa 12·10⁻⁶K⁻¹, mit guten isolierenden Eigenschaften bereitzustellen. Insbesondere soll das Material als Lötmaterial für Metalle, Legierungen und/oder andere Materialien mit einem Ausdehnungskoeffizienten von etwa 12·10⁻⁶K⁻¹ im Bereich von 20 - 950°C geeignet sein, die unter anspruchsvollen Bedingungen gefügt werden müssen.

Die Aufgabe wird gelöst durch die Bereitstellung eines Materials, umfassend mindestens die Komponenten:

| | | |
|---|---|---|
| SiO₂ | 35 - 55 % | SA |
| MgO | 20 - 50 % | SA |
| CaO | 0 - 15 % | SA |
| SrO | 0 - 15 % | SA |
| BaO | 0 - 15 % | SA |
| mit Σ CaO, SrO, BaO ≥ 5 % SA | | |

als glaskeramisches Fügematerial für den Einsatz bei hohem Temperaturen und mit einem Wäremausdehnungskoeffizienten von α₂₀₋₉₅₀ = mindestens etwa 10·10⁻⁶K⁻¹.

Die Oxide des Ca, Sr, Ba werden nachstehend auch als "schwerere Erdalkalioxide" bezeichnet. Der Ausdruck SA (= Stoffmengenanteil) bezieht sich auf die molaren Anteile der Materialien.

Bevorzugt kann das Material weiterhin folgende Komponenten umfassen:

| | | |
|---|---|---|
| Al₂O₃ | 0 - 8 % | SA |
| La₂O₃ | 0 - 8 % | SA |
| Y₂O₃ | 0 - 8 % | SA |
| ZnO | 0 - 8 % | SA |
| TiO₂ | 0 - 8 % | SA |
| ZrO₂ | 0 - 8 % | SA |
| MnO | 0 - 8 % | SA |
| FeO und/oder Fe₂O₃ | 0 - 10 % | SA |

Weitere Komponenten sollten vorzugsweise nicht oder im wesentlichen nicht oder nur in solchen Mengen vorhanden sein, die als Verunreinigungen anzusprechen sind (z.B. unter 1 % SA, insbesondere unter 0,1 % SA).

Es ist ein Material zu bevorzugen, das aus einer überschaubaren Anzahl an Bestandteilen besteht, um die Gefahr chemischer Reaktionen zu begrenzen, und das entsprechend den Anforderungen weitgehend auskristallisiert. Dies wird begünstigt durch einen Ausgangspunkt in der Zusammensetzung in der Nähe von stöchiometrischen Verbindungen. Allerdings fördert der Einsatz weniger Komponenten sowie eine Komposition nahe kristallinen Verbindungen üblicherweise die Kristallisationsgeschwindigkeit (Keimbildungsgeschwindigkeit und Kristallwachstumsgeschwindigkeit).

Überraschenderweise hat sich herausgestellt, daß die erfindungsgemäß aufgefundenen Zusammensetzungen in Glasform trotz weniger Komponenten nahe der Stöchiometrie von kristallinen Verbindungen eine gute Glasstabilität aufweisen und sich auch als feines Glaspulver und unter langsamen Aufheizbedingungen mittels viskosem Fließen zu einem dichten Material verarbeiten lassen.

Die erfindungsgemäßen Materialien sind im wesentlichen bzw. völlig alkalifrei. Dies macht sie für die Verwendung bei hohen Temperaturen, insbesondere bei solchen im Bereich von mindestens bis etwa 1100°C besonders geeignet.

Die resultierenden Glaskeramiken enthalten als kristalline Hauptbestandteile Enstatit (MgSiO₃) und/oder Forsterit (Mg₂SiO₄). Bevorzugt liegt das Verhältnis von SiO₂ zu MgO im Bereich von etwa 1,7:1 bis 1,0:1, besonders bevorzugt im Bereich von etwa 1,45:1 bis 1,0:1. Hierdurch läßt sich z.B. die Kristallisation von α-Cristobalit zurückdrängen. Zwar hat α-Cristobalit einen hohen Ausdehnungskoeffizienten; aufgrund der Umkristallisierungseffekte, die zu einem sprunghaften Anstieg desselben (und damit zu möglichen Spannungen) führen, ist die Anwesenheit von Cristobalit-Kristallen jedoch weniger erwünscht.

In einer bevorzugten Ausgestaltung ist das Material zinkarm (z.B. mit weniger als 4 Gew.-%, bevorzugt unter 2 Gew.-% oder 1 Gew.-% ZnO) oder ist frei von Zinkoxid. Damit wird die Kristallisation von Willemit zurückgedrängt oder ganz vermieden.

In einer weiteren bevorzugten Ausgestaltung enthält das Material BaO als einziges oder ein Oxid der schwereren Erdalkalien. In besonders bevorzugter Weise enthält dieses Material weiterhin Aluminiumoxid. Das Vorhandensein von Ba in Kombination mit Al fördert die Kristallisation von modifiziertem Celsian (BaAl₂Si₂O₈). Zusammensetzungen mit diesen Komponenten können auch ZnO enthalten, ohne daß der Ausdehnungskoeffizient unter den erwünschten Wert sinken würde. Dies kann unter verarbeitungstechnischen Aspekten (für die Verbesserung des Fließverhaltens) erwünscht sein.

Weiterhin ist es besonders wünschenswert, als Oxide der schwereren Erdalkalien eine Mischung aus mindestens zwei dieser Erdalkalioxiden einzusetzen, ganz bevorzugt CaO und SrO und BaO gemeinsam. Es hat sich herausgestellt, daß die Kristallisation solcher Gläser bei einer gegebenen Temperatur langsamer verläuft, was für das Fügen insbesondere von Hochtemperatur-Brennstoffzellen bzw. Stacks daraus besonders vorteilhaft ist. Aufgrund von deren Ausmaßen (die z.B. im Bereich von 20-50 cm in einer Raumrichtung liegen können) ist zur Vermeidung von Spannungen beim Erhitzen ein relativ langsames Aufheizen notwendig. Eine langsame Kristallisation bietet den Vorteil, daß die Viskosität relativ lange niedrig bleibt und die Haltezeit verlängert werden kann.

Die erfindungsgemäßen Materialien können weiterhin z.B. Boroxid und/oder Yttriumoxid enthalten. Diese Substanzen bewirken ebenfalls eine Verlangsamung der Kristallisation und tragen zur Verbesserung der Glasstabilität bei.

Die erfindungsgemäßen Zusammensetzungen enthalten keine Komponenten wie Alkalimetalle, die schädigende chemische Reaktionen unter den angegebenen Bedingungen hervorrufen. Im Betrieb zeigen sie elektrische Widerstände von >1 MΩ cm. Sie kristallisieren so vollständig, daß sie bei der Einsatztemperatur eine Viskosität von ca. 10¹² Pa·s besitzen, wodurch die mechanische Stabilität gewährleistet ist.

Bevorzugte Zusammensetzungen bestehen aus den Komponenten

| | | |
|---|---|---|
| SiO₂ | 35 - 55 % | SA(Stoffmengenanteile) |
| MgO | 20 - 50 % | SA |
| CaO | 0 - 15 % | SA |
| SrO | 0 - 15 % | SA |
| BaO | 0 - 15 % | SA |
| B₂O₃ | 0 - 20 % | SA |
| Al₂O₃ | 0 - 8 % | SA |

wobei die Summe aus CaO, SrO und BaO größer/gleich 5% SA beträgt (Σ CaO, SrO, BaO ≥ 5 % SA).

Weiterhin sind bevorzugte Zusammensetzungen solche aus den Komponenten

| | | |
|---|---|---|
| SiO₂ | 40 - 50 % | SA |
| MgO | 30 - 40 % | SA |
| CaO | 0 - 10 % | SA |
| SrO | 0 - 10 % | SA |
| BaO | 0 - 10 % | SA |
| B₂O₃ | 5 - 15 % | SA |
| Al₂O₃ | 2 - 6 % | SA |
| ZnO | 2 - 8 % | SA |
| mit Σ CaO, SrO, BaO ≥ 5 % SA | | |

oder solche aus den Komponenten

| | | |
|---|---|---|
| SiO₂ | 40 - 50 % | SA |
| MgO | 25 - 35 % | SA |
| CaO | 3 - 10 % | SA |
| SrO | 0 - 10 % | SA |
| BaO | 3 - 10 % | SA |
| B₂O₃ | 5 - 15 % | SA |
| Al₂O₃ | 2 - 6 % | SA |
| Y₂O₃ | 2 - 8 % | SA |
| mit Σ CaO, SrO, BaO ≥ 5 % SA | | |

Außerdem können zu den genannten Zusammensetzungen z.B. zur Verbesserung der verarbeitungstechnischen Eigenschaften, z.B. des Fließverhaltens (zur Variierung der Viskosität), ggf. weitere Komponenten zugegeben werden, z.B. TiO₂, MnO, FeO, Fe₂O₃, La₂O₃ und, soweit nicht bereits erwähnt, ZnO und/oder Y₂O₃, in Mengen bis zu jeweils etwa 10% SA, zusammen bevorzugt nicht über 30% SA.

Die Gemenge werden in den entsprechenden Anteilen aus den Rohstoffen (Oxiden, Carbonaten etc.) hergestellt und eingeschmolzen. Als Rohstoffe kommen neben kristallinen Ausgangsstoffen auch bereits erschmolzene Gläser oder dgl. aus einer oder mehreren Komponenten in Frage. Aus der Schmelze kann sowohl ein Glasblock als auch eine Fritte gegossen werden. Das Glas kann z.B. als Pulver, als Formteil (z.B. als dünne, flexible Folie) oder als Paste aus einem Pulver, aufgeschlämmt in einer organischen Flüssigkeit oder in H₂O, weiterverarbeitet werden.

Bevorzugt wird für die Weiterverarbeitung ein Pulver oder eine Paste verwendet, ganz besonders bevorzugt mit Teilchengrößen im Bereich eines d₅₀-Wertes von ca. 1 µm.

Ein Pulver mit einem d₅₀-Wert von ca. 1 µm weist ein großes Oberflächen-Volumen-Verhältnis auf. Im Gegensatz zum Inneren findet an Oberflächen heterogene (also energetisch begünstigte) Keimbildung statt, so daß die bevorzugte Korngrößenverteilung eine Kristallisation signifikant erleichtert. Es wurde gefunden, daß solche Pulver eine ausreichende Glasstabilität besitzen, um ein Absetzverhalten bei Aufheizraten von z.B. ca. 1 K/min zu gewähren.

Ein Breitlaufen der Gläser kann durch eine Haltezeit oder ein langsames Durchfahren der Temperaturen zwischen T_{g} und dem Kristallisationsbeginn erfolgen. Zu beachten ist hierbei, daß bei der Verwendung von feinerem Pulver sich der Kristallisationsbeginn zu entsprechend tieferen Temperaturen verschiebt.

Die Kristallisation im Anschluß an den Fließprozeß sollte insbesondere bei Verwendung massiver Glaskörper zweistufig erfolgen. Zur Keimbildung ist eine ca. einstündige Haltezeit bei einer Temperatur von ca. 50 K oberhalb von T_{g} in der Regel ausreichend. Zur Kristallisation wird eine Temperaturstufe zwischen 900 und 950°C empfohlen; sie kann bei entsprechenden Einsatztemperaturen aber auch direkt dem Betrieb vorgeschaltet werden. Bei signifikanten Glasphasenanteilen ist im Einsatz eine weitere Kristallisation möglich.

Für die Verwendung als Lötmaterial in Hochtemperaturbrenn-stoffzellen ist eine Fügetemperatur zwischen 800°C und 1000°C, bevorzugt von etwa 950°C, empfehlenswert. Die Haltezeit sollte vorzugsweise 10 Minuten nicht unter- und 5 Stunden nicht überschreiten.

Weitere Kristallphasen können, abhängig von der Zusammensetzung und weiteren Bestandteilen, als Nebenphasen auftreten. Der Ausdehnungskoeffizient der Glaskeramiken liegt je nach Kristallphasen und -anteil im Bereich von 10·10⁻⁶K⁻¹ bis 14·10⁻⁶K⁻¹ (20- 1000°C). Je nach Glasphasenanteil kann der Ausdehnungskoeffizient mit der Temperatur relativ linear verlaufen bzw. bei der T_{g} des Restglases einen signifikanten Sprung zu höheren Werten aufweisen.

### Beispiele:

| Zusammensetzung | 1 | 2 | 3 | 4 | 5 |
|---|---|---|---|---|---|
| SiO₂ | 47 % SA | 43 % SA | 45 % SA | 38 % SA | 43 % SA |
| MgO | 35 % SA | 30 % SA | 31 % SA | 30 % SA | 30 % SA |
| CaO | 5 % SA | 3 % SA | 2 % SA | 3 % SA | 2 % SA |
| SrO | - | 3 % SA | 2 % SA | 3 % SA | 2 % SA |
| BaO | 5 % SA | 3 % SA | 2 % SA | 8 % SA | 3 % SA |
| Al₂O₃ | 5 % SA | 6 % SA | 4 % SA | 5 % SA | 6 % SA |
| B₂O₃ | 3 % SA | 12 % SA | 10 % SA | 12 % SA | 12 % SA |
| ZnO | - | - | 4 % SA | - | - |
| La₂O | - | - | - | - | 2 % SA |
| T_{g} | 671°C | 659°C | 669°C | 654°C | |
| Tₖᵣᵢₛₜ | 899°C | 887°C | 879°C | 810°C | |
| Kristallphasen | Enstatit | Enstatit | Enstatit | Enstatit | |
| | Celsian | Celsian | Zn₂SiO₄ | Celsian | |
| | | BaₓSr₁₋ₓAl₂ | BaₓSr₁₋ₓAl₂ | BaₓSr₁₋ₓAl₂ | |
| | | Si₂O₈ | Si₂O₈ | Si₂O₈ | |
| α₂₀₋₉₅₀ | 12,4·10⁻⁶K⁻¹ | 12,0·10⁻⁶K⁻¹ | 10,0·10⁻⁶K⁻¹ | 10,8·10⁻⁶K⁻¹ | 11,1(4)⁻⁶K⁻¹ |

Aus den Zusammensetzungen 1 bis 5 wurden Gläser erschmolzen. Diese wurden anschließend vermahlen.

Für die Beispiele 1 bis 4 wurde folgendes Temperaturprogramm gewählt: Aufheizen mit etwa 2K/min bis 850°C, weiter mit etwa 1K/min bis 880°C, 30minütige Haltezeit, Aufheizen mit 0,5K/min bis 950°C, 3-stündige Haltezeit, Abkühlen mit 2K/min bis Umgebungstemperatur. Beispiel 5 wurde als Paste verarbeitet, die erwärmt und dann eine halbe Stunde auf einer Temperatur von 950 bis 1000°C gehalten wurde. Dann wurde auf 850°C abgekühlt, diese Temperatur wurde 10 Stunden gehalten. Danach war die Umwandlung des Glases in eine Glaskeramik mit dem angegebenen thermischen Ausdehnungskoeffizienten vollständig.

Röntgenografisch konnte bei keinem der Gläser Kristallisation festgestellt werden. Die Gläser weisen Transformationstemperaturbereiche (T_{g}) von 630 - 710°C auf und zeigen bei Differentialthermoanalysen (DTA) einen Kristallisationsbeginn zwischen 800°C und 950°C (5 K/min Aufheizrate, Pulver mit einem d₅₀-Wert von ca. 50µm, ca. 50 mg Einwaage).

## Patentansprüche

1. Verwendung einer alkalifreien Oxidmischung, umfassend mindestens die folgenden Komponenten:
(a) Siliciumdioxid in einem Stoffmengenanteil von 35 bis 55 %,
(b) Magnesiumoxid in einem Stoffmengenanteil von 20 bis 50 % sowie
(c) mindestens ein Oxid, ausgewählt unter Calciumoxid, Strontiumoxid und Bariumoxid, mit der Maßgabe, daß der Stoffmengenanteil von Calciumoxid, Strontiumoxid und Bariumoxid zusammen mindestens 5 % beträgt und der Stoffmengenanteil jedes einzelnen dieser drei Oxide 15 % nicht übersteigt, als glaskeramisches Fügematerial mit einem Wäremausdehnungskoeffizienten von ≥ 10·10⁻⁶K⁻¹ für den Einsatz bei hohen Temperaturen, oder zur Herstellung eines solchen Fügematerials.

2. Verwendung einer Zusammensetzung nach Anspruch 1, dadurch gekennzeichnet, daß die Oxidmischung zusätzlich ein oder mehrere Oxide enthält, ausgewählt aus der Gruppe B₂O_{3,}Al₂O_{3,} La₂O_{3,} Y₂O_{3,} ZnO, TiO_{2,} ZrO_{2,} FeO und Fe₂O₃

3. Verwendung einer Zusammensetzung nach Anspruch 2, dadurch gekennzeichnet, daß FeO und Fe₂O₃ zusammen in einem Stoffmengenanteil von bis zu 10 %, jedes der anderen dort genannten Oxide in einem Stoffmengenanteil von bis zu 8 % vorliegen kann.

4. Verwendung einer Oxidmischung nach einem der Ansprüche 1 bis 3 mit den folgenden Komponenten:
| | | |
|---|---|---|
| SiO₂ | 40 -50 % | SA |
| MgO | 30 - 40 % | SA |
| CaO | 0 - 10 % | SA |
| SrO | 0 - 10 % | SA |
| BaO | 0 - 10 % | SA |
| B₂O₃ | 5 - 15 % | SA |
| Al₂O₃ | 2 - 6 % | SA |
| ZnO | 2 - 8 % | SA. |

5. Verwendung einer Oxidmischung nach einem der Ansprüche 1 bis 3 mit den folgenden Komponenten:
| | | |
|---|---|---|
| SiO₂ | 40 - 50 % | SA |
| MgO | 25 - 35 % | SA |
| CaO | 3 - 10 % | SA |
| SrO | 0 - 10 % | SA |
| BaO | 3 - 10 % | SA |
| B₂O₃ | 5 - 15 % | SA |
| Al₂O₃ | 2 - 6 % | SA |
| Y₂O₃ | 2 - 8 % | SA. |

6. Verwendung einer Oxidmischung nach einem der voranstehenden Ansprüche als Fügematerial in einer Hochtemperaturbrennstoffzelle oder für den Einsatz bei der Fügung einer solchen Hochtemperaturbrennstoffzelle.

7. Verwendung nach einem der voranstehenden Ansprüche, dadurch gekennzeichnet, daß die Komponenten zur Herstellung des Fügematerials als kristalline oder teilweise kristalline und teilweise amorphe Ausgangsstoffe eingesetzt werden.

8. Verwendung nach Anspruch 7, dadurch gekennzeichnet, daß aus den Ausgangsstoffen ein Glas erschmolzen wird und dieses entweder als Formteil oder in gemahlener Form einem Temperaturverlauf ausgesetzt wird, der zuerst ein Breit-laufen und anschließend die Bildung der Glaskeramik bewirkt.

9. Verwendung nach einem der Ansprüche 1 bis 6, dadurch gekennzeichnet, daß die Komponenten zur Herstellung des Fügematerials in Form von Glas vorliegen.

10. Verwendung nach Anspruch 9, dadurch gekennzeichnet, daß das Glas entweder als Formteil oder in gemahlener Form einem Temperaturverlauf ausgesetzt wird, der zuerst ein Breitlaufen und anschließend die Bildung der Glaskeramik bewirkt.

11. Verwendung nach Anspruch 8 oder 10, dadurch gekennzeichnet, daß das Glas dem genannten Temperaturverlauf in Form einer dünnen Folie, als Pulver oder als Paste aus einem Pulver in einer organischen oder anorganischen Schlämm-Flüssigkeit ausgesetzt wird.
